# EUROPÄISCHE PATENTANMELDUNG

(11) **EP 4 741 292 A1**
(43) Veröffentlichungstag der Anmeldung: **13.05.2026**
(21) Anmeldenummer: 24212150.7
(22) Anmeldetag: 11.11.2024
(51) Int. Cl.: B64G 1/22

(54) **HALTESYSTEM**

(71) Anmelder: EXOLAUNCH GmbH, 10785 Berlin (DE)
(72) Erfinder: STERNHARZ, Dmitriy, 10785 Berlin (DE); SCHWARZ, Peter, 5023 Salzburg (AT); GRUBER, Johannes, 5020 Salzburg (AT)
(74) Vertreter: Manitz Finsterwald Patent- und Rechtsanwaltspartnerschaft mbB

(57) **Zusammenfassung**

Ein Haltesystem zum lösbaren Befestigen von Nutzlast besteht aus vier lösbar miteinander verbundenen Baugruppen, nämlich zwei Längsträgern und zwei Querträgern, an denen zumindest drei zwischen einer Freigabeposition und einer Arretierposition verstellbare Halterungen montiert sind.

## Beschreibung

Die Erfindung betrifft ein Haltesystem zum lösbaren Befestigen von Nutzlast. Derartige Haltesysteme werden in der Raumfahrt verwendet, um Nutzlast wie beispielsweise Satelliten durch Befestigung an einer Trägerrakete in eine bestimmte Umlaufbahn zu transportieren und dort zu lösen und freizugeben. Wenn die Nutzlast eine gewisse Größe überschreitet, können Fertigung, Transport und Montage eines solchen Haltesystems problematisch sein.

Es ist die Aufgabe der vorliegenden Erfindung, ein Haltesystem zum lösbaren Befestigen von Nutzlast vorzuschlagen, bei dem Fertigung, Transport und Montage auch bei großer Nutzlast vereinfacht sind.

Diese Aufgabe wird durch den Gegenstand des Anspruchs 1 gelöst. Vorteilhafte Weiterbildungen sind in den abhängigen Ansprüchen definiert und ergeben sich außerdem aus der Beschreibung und den Zeichnungen.

Das erfindungsgemäße Haltesystem dient zum lösbaren Befestigen von Nutzlast und besteht aus vier lösbar miteinander verbundenen Baugruppen, nämlich zwei Längsträgern und zwei Querträgern. An den Baugruppen sind zumindest drei zwischen einer Freigabeposition und einer Arretierposition verstellbare Halterungen montiert.

Dabei kann an jeder Baugruppe eine Halterung vorgesehen sein. Es ist jedoch auch möglich, dass an einer Baugruppe keine oder mehr als nur eine Halterung vorgesehen ist.

Die Längsträger und die Querträger können sich insbesondere rechtwinklig zueinander erstrecken, sodass das Haltesystem in Draufsicht eine viereckige oder rechteckige Grundform aufweist. Die Längsträger einerseits und die Querträger andererseits können unterschiedlich lang sein. Auch ist es möglich, dass die Längsträger und Querträger gleich lang sind, was in Draufsicht zu einer quadratischen Grundform führt. Bei den Längsträgern und den Querträgern handelt es sich um separate Einzelteile, also um einzelne, vormontierte oder vormontierbare Baugruppen, die insbesondere lösbar miteinander verbunden, beispielsweise verschraubt, sind. Dadurch ergibt sich eine modulartige Ausgestaltung des Haltesystems, dessen einzelne Baugruppen relativ kompakt und dadurch vergleichsweise leicht zu fertigen, zu transportieren und zu montieren bzw. zu handhaben sind. Durch den modularen Aufbau des Haltesystems ist dessen Handhabung erheblich erleichtert, da nicht das Haltesystem als Ganzes transportiert werden muss, sondern die einzelnen, wesentlich kompakteren Baugruppen.

Ein Beispiel für Nutzlast ist ein Satellit, der über das Haltesystem an eine Trägerrakete gekoppelt, durch diese in eine bestimmte Umlaufbahn transportiert und dort von der Trägerrakete gelöst werden kann, indem die Halterungen von der Arretierposition in die Freigabeposition verstellt werden. Die Halterungen koppeln oder halten die Nutzlast an dem Haltesystem, wenn sie sich in der Arretierposition befinden, und geben die Nutzlast von dem Haltesystem frei, wenn sie sich in der Freigabeposition befinden.

Für eine synchrone Verstellung aller Halterungen kann jede Halterung mit jeder benachbarten Halterung über ein Gestänge verbunden sein. Bei einer Verstellbewegung einer Halterung von der Arretierposition in die Freigabeposition kann diese Verstellbewegung somit über das Gestänge an die benachbarte Halterung bzw. die benachbarten Halterungen übertragen werden, sodass alle Halterungen synchron verstellt werden.

Jede Halterung kann insbesondere mit einer ersten benachbarten Halterung über ein erstes Gestänge und mit einer zweiten benachbarten Halterung über ein zweites Gestänge verbunden sein. In diesem Fall sind die Halterungen des Haltesystems mechanisch in Reihe geschaltet, um eine synchrone Verstellung aller Halterungen zu erreichen.

Das erste Gestänge und/oder das zweite Gestänge kann einen oder mehrere, beispielsweise zwei, Umlenkhebel aufweisen. Der oder die Umlenkhebel können insbesondere an zumindest einer der Baugruppen, etwa an einem Querträger, schwenkbar gelagert sein. Ein Umlenkhebel kann insbesondere die Richtung der Verstellbewegung von einer Halterung zu ihrer benachbarten vor- oder nachgelagerten Halterung umlenken oder umkehren. Insbesondere kann das jeweilige Gestänge aus einem ersten Umlenkhebel und einem zweiten Umlenkhebel sowie einer starren Stange zwischen den beiden Umlenkhebeln bestehen. Die Umlenkhebel können jeweils mit einer der beiden Halterungen und einem der Enden der starren Stange verbunden sein.

Die Baugruppen können mit Führungen für die Gestänge versehen sein, sodass die Bewegung der Gestänge klar definiert ist.

Die Halterungen können in die Freigabeposition vorspannbar sein, und das Haltesystem kann eine Auslöseeinheit aufweisen, die in einem Verriegelungszustand die Halterungen entgegen der Vorspannkraft in der Arretierposition hält und in einem Auslösezustand die Halterungen zum Verstellen in die Freigabeposition freigibt. Die Vorspannung kann beispielsweise durch Federn, etwa Druckfedern, erfolgen. Solange die Auslöseeinheit in dem Verriegelungszustand ist, verhindert diese eine Verstellbewegung von der Arretierposition in die Freigabeposition gegen die Vorspannkraft der Federn. Wird die Auslöseeinheit durch Auslösung in den Auslösezustand versetzt, gibt sie die Halterungen frei, sodass diese aufgrund der Vorspannkraft von der Arretierposition in die Freigabeposition verstellt werden.

Die Auslöseeinheit kann insbesondere an dem Gestänge, etwa an einer der starren Stangen des Gestänges, angreifen und das Gestänge halten, sodass verhindert wird, dass die Halterungen in die Freigabeposition verstellt werden. Die Auslöseeinheit kann ansteuerbar sein, um das Gestänge bei Erreichen einer gewünschten Umlaufbahn freizugeben.

Jeder der Halterungen kann ein eigener vorgespannter Abwurfhebel zugeordnet sein. Damit entspricht die Anzahl der Abwurfhebel wenigstens der Anzahl der Halterungen. Die Abwurfhebel sind dazu geeignet, beim Auslösen, also beim Verstellen der Halterungen in die Freigabeposition, eine an der Nutzlast montierte und in der Arretierposition an der jeweiligen Halterung zuvor arretierte Komponente aktiv abzuwerfen, um das Lösen der Nutzlast vom Haltesystem zu bewirken.

Für eine synchrone Auslösung der Abwurfhebel kann ein Synchronisierungsmechanismus vorgesehen sein. Der Synchronisierungsmechanismus kann ein Zugseil aufweisen, das zum synchronen Auslösen von Abwurfhebeln an zumindest zwei Abwurfhebeln angreift, wobei das Zugseil zur Gleichrichtung von Auslösebewegungen mittels Umlenkrollen so umgelenkt ist, dass es sich zumindest einmal überkreuzt. In dem Punkt, in dem sich unterschiedliche Abschnitte des Zugseils überkreuzen, können diese Abschnitte durch ein Bauteil geführt sein, an dem Abschnitten des Zugseils entlang gleiten können, um insbesondere einen Kontakt und dadurch bedingte Reibung zwischen den Seilabschnitten zu vermeiden. Das Bauteil kann hierzu unterschiedliche getrennte Ebenen oder Kanäle aufweisen, wobei die sich kreuzenden Seilabschnitte durch die unterschiedlichen Ebenen oder Kanäle geführt werden. Das Bauteil kann beispielsweise als Gehäuse, Kasten oder Box ausgeführt sein.

Um das Seil stets auf Spannung zu halten, kann das Zugseil durch zumindest einen Seilspanner gespannt sein. Der Seilspanner, der als Seilrolle ausgebildet sein kann, kann gefedert oder ungefedert sein.

In einer Ausgestaltung können zwei Baugruppen jeweils zwei Abwurfhebel aufweisen, und der Synchronisierungsmechanismus kann an jedem Querträger einen Quersynchronisierungsmechanismus für eine synchrone Auslösung der beiden Abwurfhebel einer der beiden Baugruppen aufweisen. Der Synchronisierungsmechanismus kann zudem an den Längsträgern einen Längssynchronisierungsmechanismus für eine synchrone Auslösung der Abwurfhebel der beiden Baugruppen aufweisen. Mit anderen Worten dienen die beiden Quersynchronisierungsmechanismen dazu, die beiden Abwurfhebel einer Baugruppe synchronisiert auszulösen. Der Längssynchronisierungsmechanismus hingegen dient dazu, die Abwurfhebel der beiden Baugruppen miteinander zu synchronisieren, sodass alle Abwurfhebel synchron auslösen können. Die Quersynchronisierungsmechanismus und der Längssynchronisierungsmechanismus haben damit eine ähnliche Funktion und können grundsätzlich ähnlich aufgebaut sein.

Die Abwurfhebel können über an einer der Baugruppen linear geführte Stäbe an den Längssynchronisierungsmechanismus angekoppelt sein. Die Stäbe können beispielsweise an Zugseilen des Längssynchronisierungsmechanismus befestigt sein, sodass sie mit dem jeweiligen Zugseil mitbewegt werden.

Die Abwurfhebel können scherenartig ausgebildet sein und zwei Scherenhebel aufweisen, die gelenkig miteinander verbunden sind. Ferner können die Abwurfhebel jeweils einen ersten Lagerabschnitt und einen zweiten Lagerabschnitt aufweisen, an denen jeweils ein Ende eines der beiden Scherenhebel gelenkig gelagert ist. Dabei kann der erste Lagerabschnitt ortsfest an einer der Baugruppen gelagert sein, und der zweite Lagerabschnitt kann linear verfahrbar an einer der Baugruppen geführt sein. Der zweite Lagerabschnitt kann zur synchronen Auslösung an den Synchronisierungsmechanismus angebunden sein, insbesondere an den Längssynchronisierungsmechanismus und an den jeweiligen Quersynchronisierungsmechanismus.

Nachfolgend wird die Erfindung rein beispielhaft unter Bezugnahme auf ein in den Zeichnungen schematisch dargestelltes Ausführungsbeispiel erläutert. Dabei zeigt
- Fig. 1: eine perspektivische Ansicht eines Haltesystems gemäß einem Ausführungsbeispiel,
- Fig. 2: eine perspektivische Unteransicht des Haltesystems von Fig. 1,
- Fig. 3: eine perspektivische Detailansicht von unten von einer Halterung, einem Gestänge und einem Abwurfhebel des Haltesystems von Fig. 1,
- Fig. 4: eine Draufsicht auf die Unterseite eines Querträgers des Haltesystems von Fig. 1, wobei sich die Halterungen in der Arretierposition befinden,
- Fig. 5: eine Draufsicht gemäß Fig. 4, wobei sich die Halterungen in der Freigabeposition befinden,
- Fig. 6: eine perspektivische Detailansicht einer Oberseite von einer Halterung und einem Abwurfhebel des Haltesystems von Fig. 1,
- Fig. 7: die perspektivische Detailansicht gemäß Fig. 6, wobei der Querträger ausgeblendet ist, und
- Fig. 8: eine Querschnittsansicht eines Lagerabschnitts eines Abwurfhebels sowie dessen Führung durch einen Querträger des Haltesystems von Fig. 1.

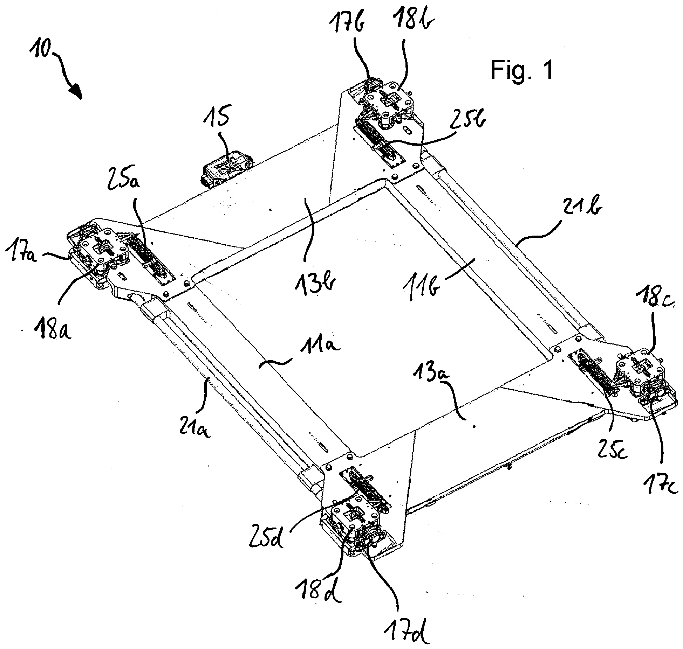

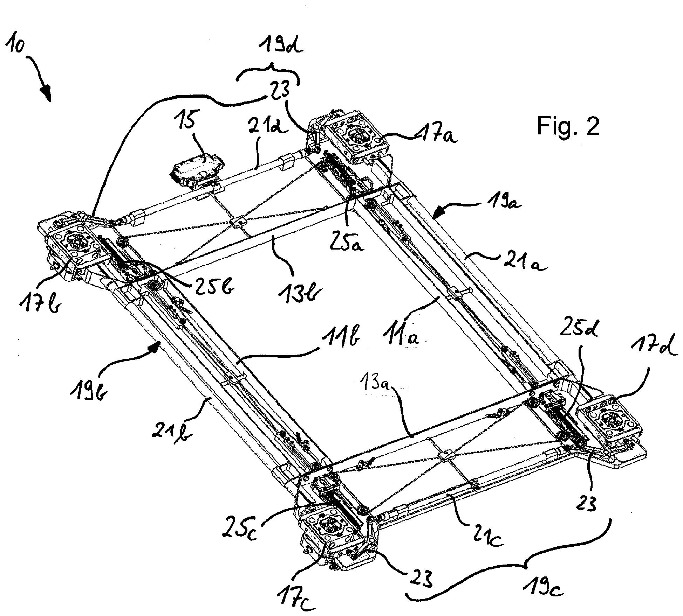

In Fig. 1 und 2 ist ein Haltesystem 10 in perspektivischer Ansicht gezeigt, wobei Fig. 1 die Oberseite und Fig. 2 die Unterseite des Haltesystems 10 zeigt. Dieses besteht aus zwei parallel beabstandeten Längsträgern 11a, 11b und zwei parallel beabstandeten Querträgern 13a, 13b. Die Längsträger 11a, 11b erstrecken sich rechtwinklig zu den Querträgern 13a, 13b, sodass das Haltesystem 10 in Draufsicht eine viereckige und beim dargestellten Ausführungsbeispiel auch rechteckige Grundform aufweist. Bei den Längsträgern 11a, 11b und den Querträgern 13a, 13b handelt es sich um separate Module, also um Baugruppen, die insbesondere lösbar miteinander verbunden sind. Im dargestellten Ausführungsbeispiel sind die Baugruppen miteinander über Schraubverbindungen 59a, 59b, 59c, 59d miteinander verschraubt, wobei selbstverständlich auch andere und auch nicht lösbare Verbindungsmittel möglich sind. Im vorliegenden Ausführungsbeispiel zeichnen sich die Längsträger 11a, 11b und die Querträger 13a, 13b jeweils durch eine wannenartige Bauform aus.

An den Baugruppen 11a, 11b, 13a, 13b sind vier gleiche, zwischen einer Freigabeposition und einer Arretierposition verstellbare Halterungen 17a, 17b, 17c, 17d montiert. Die Halterungen 17a, 17b, 17c, 17d sind in grundsätzlich bekannter Weise so ausgebildet, dass daran eine Haltekomponente 18a, 18b, 18c, 18d der Nutzlast fixiert wird, wenn sich die jeweilige Halterung 17a, 17b, 17c, 17d in der Arretierposition befindet, und von der Halterung 17a, 17b, 17c, 17d freigegeben wird, wenn sich die jeweilige Halterung 17a, 17b, 17c, 17d in der Freigabeposition befindet. Die vier Haltekomponenten 18a, 18b, 18c, 18d sind an der Nutzlast montiert, sodass das gesamte Haltesystem 10 mit der Nutzlast mittels einer Trägerrakete in eine bestimmte Umlaufbahn transportiert werden kann. Werden die Halterungen 17a, 17b, 17c, 17d von der Arretierposition in die Freigabeposition verstellt, kann die Nutzlast freigegeben und abgeworfen werden.

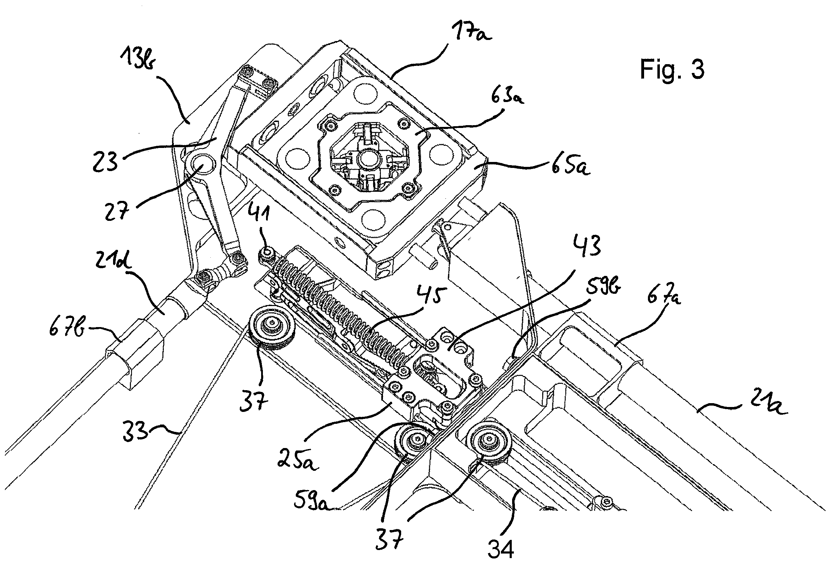

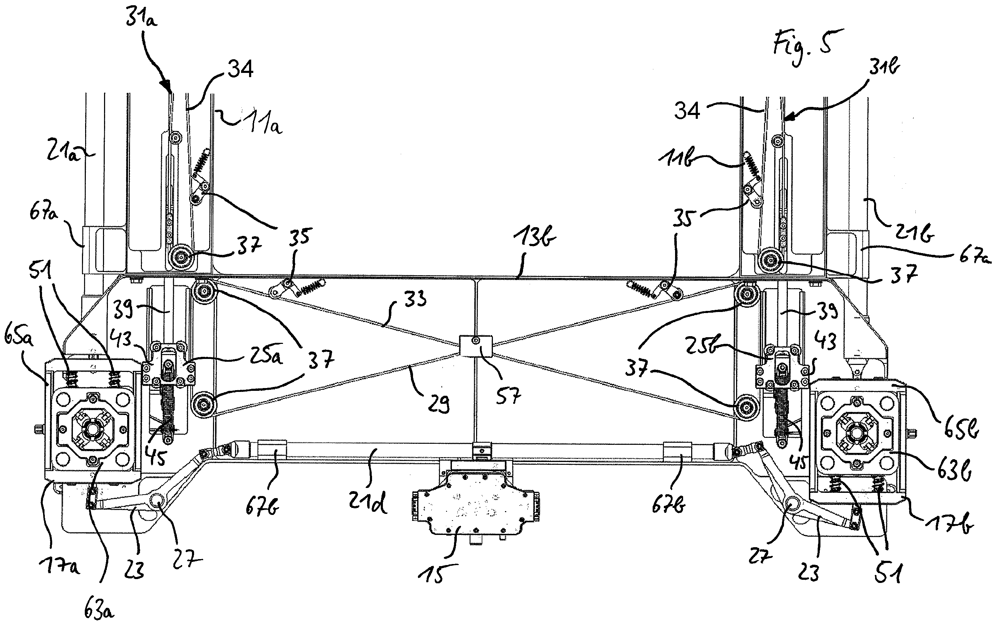

Anhand der Fig. 3 bis 6 wird nachfolgend mit Bezug auf die beiden Halterungen 17a, 17b der grundlegende Aufbau der Halterungen dargelegt. Diese weisen jeweils eine ortsfest an der jeweiligen Baugruppe 11a, 11b, 13a, 13b montierte Verriegelungseinheit 63a, 63b und ein rahmenförmiges Auslöseelement 65a, 65b auf, das translatorisch zu der jeweiligen Verriegelungseinheit 63a, 63b verschiebbar ist. Die Verschiebung des Auslöseelements 65a, 65b zwischen seinen beiden Endpositionen entspricht einer Verstellbewegung von der Arretierposition in die Freigabeposition oder umgekehrt. Die Verschiebung führt also zu einer Verriegelung oder Entriegelung der Verriegelungseinheit 63a, 63b, welche wiederum einen nicht näher dargestellten und beschriebenen Verriegelungsmechanismus aufweist, der in der Arretierposition die jeweilige Befestigungskomponente der Nutzlast arretiert und in der Freigabeposition freigibt. Die Auslöseelemente 65a, 65b und damit auch die Halterungen 17a, 17b, 17c, 17d sind durch Druckfedern 51 (Fig. 5) in die Freigabeposition vorgespannt.

Um eine störungsfreie Freigabe der Nutzlast zu gewährleisten, erfolgt das Verstellen der Halterungen 17a, 17b, 17c, 17d synchron. Dies geschieht im vorliegenden Fall dadurch, dass jede Halterung 17a, 17b, 17c, 17d mit ihren beiden benachbarten Halterungen 17a, 17b, 17c, 17d über jeweils ein Gestänge 19a, 19b, 19c, 19d verbunden ist. Die Gestänge 19a, 19b, 19c, 19d sind so ausgebildet und mit den Halterungen 17a, 17b, 17c, 17d verbunden, dass sie die Verstellbewegung einer jeweiligen Halterung 17a, 17b, 17c, 17d von der Arretierposition in die Freigabeposition an beide benachbarten Halterungen 17a, 17b, 17c, 17d übertragen. Durch diese mechanische Zwangskopplung ergibt sich eine zeitlich synchrone, also eine gleichzeitige Auslösung aller vier Halterungen 17a, 17b, 17c, 17d.

Im vorliegenden Ausführungsbeispiel sind entsprechend der Anzahl der Halterungen 17a, 17b, 17c, 17d vier Gestänge 19a, 19b, 19c, 19d vorhanden. Zwei Gestänge 19c, 19d erstrecken sich parallel zu den beiden Querträgern 13a, 13b, und die beiden anderen Gestänge 19a, 19b erstrecken sich parallel zu den beiden Längsträgern 11a, 11b.

Die beiden parallel zu den Längsträgern 11a, 11b verlaufenden Gestänge 19a, 19b bestehen jeweils aus einer starren Stange 21a, 21b, die an ihren beiden Enden mit den beiden Halterungen 17a, 17b, 17c, 17d verbunden ist und durch Führungen 67a der Längsträger 11a, 11b translatorisch geführt wird.

Die beiden parallel zu den Querträgern 13a, 13b verlaufenden Gestänge 19c, 19d weisen ebenfalls jeweils eine starre Stange 21c, 21d auf. Die Stangen 21c, 21d dieser beiden Gestänge 19c, 19d werden durch Führungen 67b der Querträger 13a, 13b translatorisch geführt und sind, wie insbesondere Fig. 3 zeigt, an ihren beiden Enden gelenkig mit jeweils einem Ende eines Umlenkhebels 23 verbunden. Der Umlenkhebel 23 ist durch einen Bolzen oder Zapfen 27 schwenkbar an dem jeweiligen Querträger 13 gelagert und umfasst zwei sich von der Achse des Bolzens oder Zapfens 27 wegerstreckende Schenkel, deren freie Enden gelenkig mit der jeweiligen Stange 21c, 21d bzw. gelenkig mit einer Halterung 17a, 17b, 17c, 17d verbunden sind. Durch die Umlenkhebel 23 kann die Verstellbewegung benachbarter Stangen, z.B. der Stangen 21a und 21d, invertiert werden, d.h. bei einer Schubbewegung der Stange 21a führt die Stange 21d eine Zugbewegung durch, sodass die Verstellbewegung der Halterungen 17a, 17b, 17c, 17d an den gegenüberliegenden Längsträgern 11a, 11b entgegengerichtet ist.

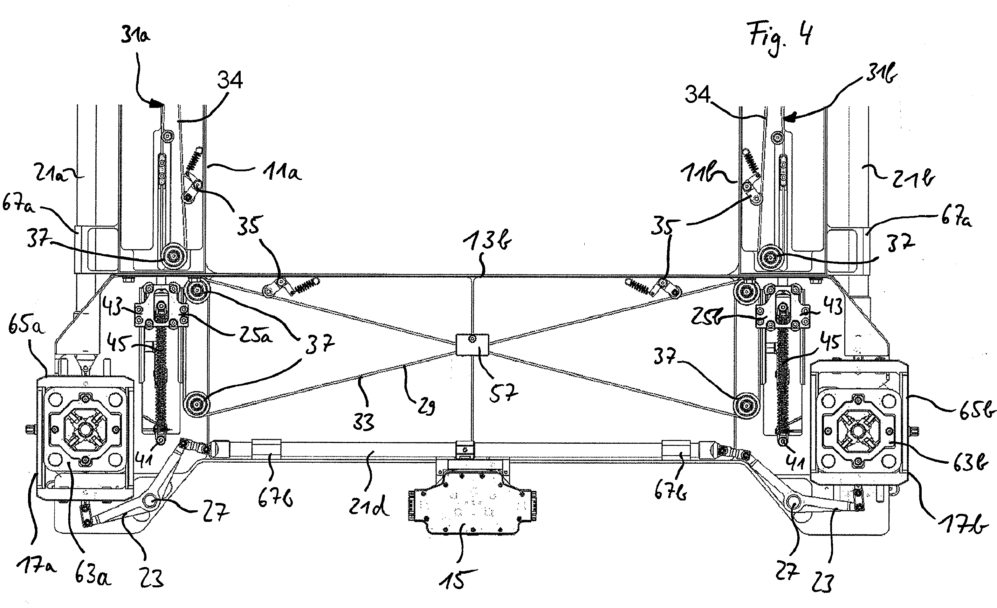

Fig. 4 und 5 zeigen eine Draufsicht auf die Unterseite eines Querträgers 13b des Haltesystems 10, wobei die beiden Halterungen 17a, 17b in Fig. 4 in der Arretierposition und in Fig. 5 in der Freigabeposition gezeigt sind. Die Halterungen 17a, 17b sind durch die in Fig. 5 sichtbaren und entspannten Druckfedern 51 in die Freigabeposition vorgespannt. Zum Abwurf der Nutzlast ist eine elektrisch ansteuerbare Auslöseeinheit 15 vorgesehen, die an der Stange 21d des die beiden Halterungen 17a, 17b verbindenden Gestänges angreift und die Stange 21d entgegen der Vorspannung der Druckfedern 51 im nicht angesteuerten Zustand fixiert, siehe Fig. 4. Wird die Auslöseeinheit 15 angesteuert, gibt sie die Stange 21d frei. Aufgrund der Vorspannung der Druckfedern 51 werden die Halterungen 17a, 17b bzw. deren Auslöseelemente 65a, 65b dabei in die Freigabeposition verstellt, wodurch sich, wie zuvor erwähnt, die Verriegelungsmechanismen der Verriegelungseinheiten 63a, 63b öffnen und die jeweilige Befestigungskomponente der Nutzlast freigeben. Die Gestänge bewirken somit eine gleichzeitige Freigabe der in den Halterungen fixierten Nutzlast.

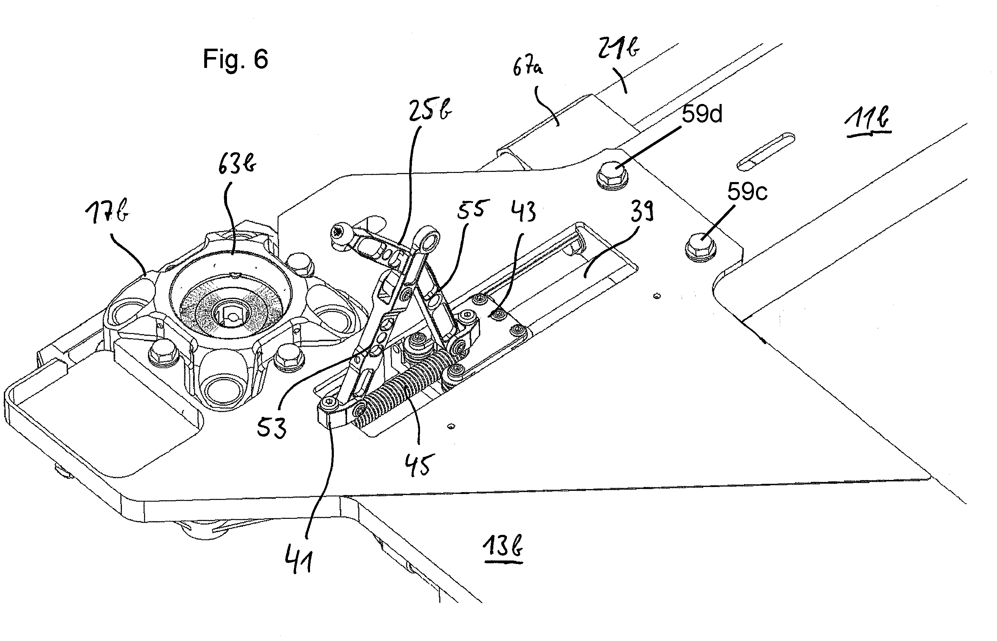

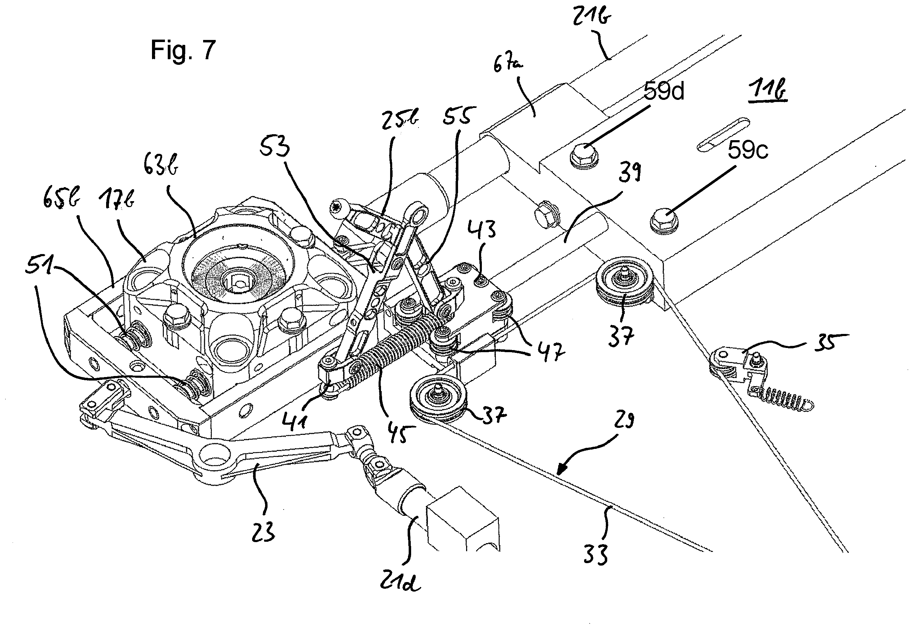

Das Haltesystem 10 weist im vorliegenden Ausführungsbeispiel ferner vier Abwurfhebel 25a, 25b, 25c, 25d auf, nämlich einen Abwurfhebel 25a, 25b, 25c, 25d der jeweils neben einer Halterung 17a, 17b, 17c, 17d angeordnet ist. Die Abwurfhebel 25a, 25b, 25c, 25d sind scherenartig mit jeweils zwei Scherenhebeln 53, 55 ausgebildet und bewegen sich bei ihrer Auslösung in die in Fig 6 und 7 gezeigte Abwurfstellung, wobei das äußere freie Ende der Scherenhebel 55 an der Nutzlast anliegt, um diese beim Abwerfen mit Kraft zu beaufschlagen.

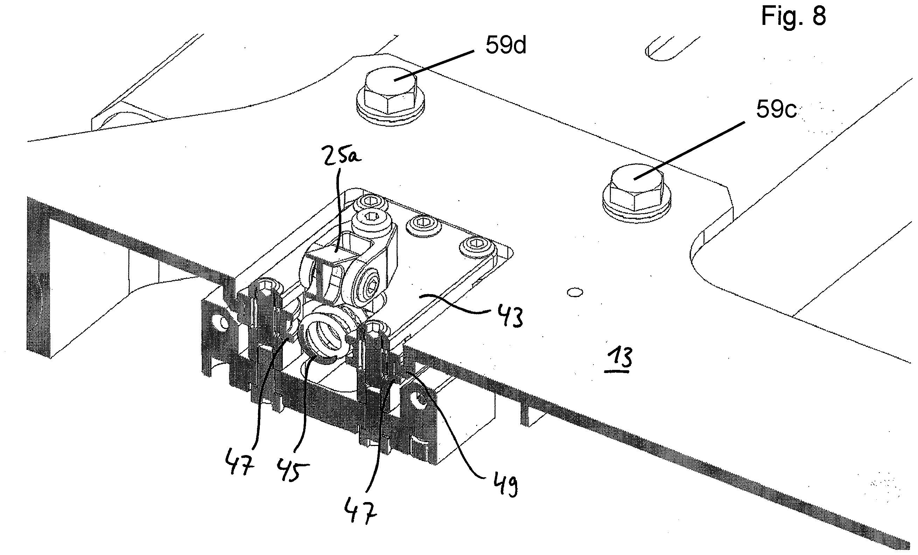

Wie insbesondere Fig. 6 und 7 zeigen, weisen die Abwurfhebel 25a, 25b, 25c, 25d jeweils einen ortsfest an dem jeweiligen Querträger 13a, 13b gelagerten ersten Lagerabschnitt 41 und einen linear an dem jeweiligen Querträger 13a, 13b verfahrbaren zweiten Lagerabschnitt 43 auf, wobei der eine Scherenhebel 53 an dem ersten Lagerabschnitt 41 und der andere Scherenhebel 55 an dem zweiten Lagerabschnitt 43 befestigt ist. Die Lagerabschnitte 41, 43 sind durch eine Zugfeder 45 in die in Fig. 6 und 7 gezeigte Abwurfstellung vorgespannt und werden vor dem Auslösen oder Abwerfen durch die Nutzlast entgegen der Vorspannkraft in der in Fig. 4 gezeigten Position gehalten. Der zweite Lagerabschnitt 43 ist, wie insbesondere Fig. 8 zeigt, durch Rollen 47 an einer Schienengeometrie 49 des jeweiligen Querträgers 13 linear verfahrbar geführt. Werden die Halterungen 17a, 17b, 17c, 17d in die Freigabeposition verstellt, können die vorgespannten Abwurfhebel 25a, 25b, 25c, 25d entspannen und üben einen Abwurfimpuls auf die Nutzlast aus.

Für eine synchrone Auslösung der Abwurfhebel 25a, 25b, 25c, 25d ist zudem ein Synchronisierungsmechanismus vorgesehen, der jeweils einen Quersynchronisierungsmechanismus 29 an jedem Querträger 13a, 13b und einen Längssynchronisierungsmechanismus 31a, 31b an den Längsträgern 11a, 11b aufweist.

Der Quersynchronisierungsmechanismus 29 eines Querträgers 13b ist insbesondere aus Fig. 4 und 5 ersichtlich, wobei der andere Querträger 13a einen gleich ausgestalteten Quersynchronisierungsmechanismus aufweist. Der Quersynchronisierungsmechanismus 29 synchronisiert die Bewegung der beiden Abwurfhebel 25 des Querträgers 13b. Zu diesem Zweck umfasst der Quersynchronisierungsmechanismus 29 ein mittels Umlenkrollen 37 umgelenktes endloses Zugseil 33, das an den zweiten Lagerabschnitten 43 der beiden Abwurfhebel 25 befestigt ist, sodass es mit diesen mitbewegt wird. Für eine Gleichrichtung von Auslösebewegungen ist das Seil 33 so umgelenkt, dass es sich einmal überkreuzt. Im Kreuzungspunkt ist das Endlosseil 33 durch ein Bauteil geführt, das im vorliegenden Ausführungsbeispiel rein beispielhaft als Box 57 ausgeführt ist. An dem Bauteil 57 können Abschnitte des Zugseils 33 entlang gleiten. In ihrem Inneren weist die Box 57 getrennte Ebenen oder Kanäle auf, um Reibungen zwischen den sich kreuzenden Abschnitten des Zugseils 33 zu verhindern.

Beim Abwerfen und der damit verbundenen Bewegung der zweiten Lagerabschnitte 43 aus der in Fig. 4 gezeigten Position in die in Fig. 5 gezeigte Position wird das Zugseil 33 entsprechend mitbewegt, um das Auslösen der an dem Querträger 13b vorhandenen Abwurfhebel 25 zu synchronisieren.

In gleicher Weise sind Längssynchronisierungsmechanismen 31a, 31b vorgesehen, die die Bewegung der Abwurfhebel 25 der beiden Querträger 13a, 13b miteinander synchronisieren. Auch die Längssynchronisierungsmechanismen 31 umfassen ein mittels Umlenkrollen 37 umgelenktes Zugseil 34, welches ebenfalls sich kreuzende Abschnitte aufweist, welche sich durch getrennte Ebenen oder Kanäle eines Bauteils, ähnlich oder gleich dem oben erwähnten gleitenden Bauteil 57, erstrecken. Das Zugseil 34 der Längssynchronisierungsmechanismen 31a, 31b ist jeweils ortsfest an Stäben 39 befestigt, die an den jeweiligen Längsträgern 11a, 11b linear verfahrbar geführt sind, sodass eine Bewegung des Stabs 39 eine entsprechende Bewegung des Zugseils 34 und umgekehrt bewirkt. Der Stab 39 ist ortsfest an dem zweiten Lagerabschnitt 43 des jeweiligen Abwurfhebels 25 befestigt.

Um die Zugseile 33, 34 des Synchronisierungsmechanismus stets auf Spannung zu halten, sind gefederte Seilrollen 35 (Fig. 7) vorgesehen, an denen das jeweilige Zugseil 33, 34 entlangläuft.

### Bezugszeichenliste

- 10: Haltesystem
- 11a, 11b: Längsträger
- 13a, 13b: Querträger
- 15: Auslöseeinheit
- 17a - 17d: Halterung
- 18a - 18d: Haltekomponente
- 19a - 19d: Gestänge
- 21a - 21d: Stange
- 23: Umlenkhebel
- 25a - 25d: Abwurfhebel
- 27: Zapfen
- 29: Quersynchronisierungsmechanismus
- 31a, 31b: Längssynchronisierungsmechanismus
- 33: Zugseil
- 34: Zugseil
- 35: Seilrolle
- 37: Umlenkrolle
- 39: Stab
- 41: Lagerabschnitt
- 43: Lagerabschnitt
- 45: Zugfeder
- 47: Rolle
- 49: Schienengeometrie
- 51: Druckfeder
- 53: Scherenhebel
- 55: Scherenhebel
- 57: Box
- 59a - 59d: Schraube
- 63a, 63b: Verriegelungseinheit
- 65a, 65b: Auslöseelement
- 67a, 67b: Führung

## Patentansprüche

1. Haltesystem (10) zum lösbaren Befestigen von Nutzlast,
bestehend aus vier lösbar miteinander verbundenen Baugruppen (11a, 11b, 13a, 13b), nämlich zwei Längsträgern (11a, 11b) und zwei Querträgern (13a, 13b), wobei an den Baugruppen zumindest drei zwischen einer Freigabeposition und einer Arretierposition verstellbare Halterungen (17a, 17b, 17c, 17d) montiert sind.

2. Haltesystem (10) nach Anspruch 1,
wobei für eine synchrone Verstellung aller Halterungen (17a, 17b, 17c, 17d) jede Halterung (17a, 17b, 17c, 17d) mit jeder benachbarten Halterung (17a, 17b, 17c, 17d) über ein Gestänge (19a, 19b, 19c, 19d) verbunden ist.

3. Haltesystem (10) nach Anspruch 2,
wobei jede Halterung (17a, 17b, 17c, 17d) mit einer ersten benachbarten Halterung (17a, 17b, 17c, 17d) über ein erstes Gestänge (19a, 19b, 19c, 19d) und mit einer zweiten benachbarten Halterung (17a, 17b, 17c, 17d) über ein zweites Gestänge (19a, 19b, 19c, 19d) verbunden ist.

4. Haltesystem (10) nach Anspruch 3,
wobei das erste Gestänge (19a, 19b, 19c, 19d) und/oder das zweite Gestänge (19a, 19b, 19c, 19d) einen Umlenkhebel (23) aufweist, der insbesondere an zumindest einer der Baugruppen (11a, 11b, 13a, 13b) schwenkbar gelagert ist.

5. Haltesystem (10) nach einem der Ansprüche 2 bis 4,
wobei die Baugruppen (11a, 11b, 13a, 13b) mit Führungen (67a, 67b) für die Gestänge (19a, 19b, 19c, 19d) versehen sind.

6. Haltesystem (10) nach einem der vorstehenden Ansprüche,
wobei die Halterungen (17a, 17b, 17c, 17d) in die Freigabeposition vorspannbar sind und das Haltesystem (10) eine Auslöseeinheit (15) aufweist, die in einem Verriegelungszustand die Halterungen (17a, 17b, 17c, 17d) entgegen der Vorspannkraft in der Arretierposition hält und in einem Auslösezustand die Halterungen (17a, 17b, 17c, 17d) zum Verstellen in die Freigabeposition freigibt.

7. Haltesystem (10) nach einem der vorstehenden Ansprüche,
wobei jeder Halterung (17a, 17b, 17c, 17d) ein eigener vorgespannter Abwurfhebel (25a, 25b, 25c, 25d) zugeordnet ist.

8. Haltesystem (10) nach Anspruch 7,
umfassend einen Synchronisierungsmechanismus für eine synchrone Auslösung der Abwurfhebel (25a, 25b, 25c, 25d).

9. Haltesystem (10) nach Anspruch 8,
wobei für eine synchrone Verstellung aller Halterungen (17a, 17b, 17c, 17d) jede Halterung (17a, 17b, 17c, 17d) mit jeder benachbarten Halterung (17a, 17b, 17c, 17d) über ein Gestänge (19a, 19b, 19c, 19d) verbunden ist, und wobei der Synchronisierungsmechanismus von den Gestängen (19a, 19b, 19c, 19d) entkoppelt ist.

10. Haltesystem (10) nach Anspruch 8 oder 9,
wobei der Synchronisierungsmechanismus ein Zugseil (33, 34) aufweist, das zum synchronen Auslösen von Abwurfhebeln (25a, 25b, 25c, 25d) an zumindest zwei Abwurfhebeln (25a, 25b, 25c, 25d) angreift, wobei das Zugseil (33, 34) zur Gleichrichtung von Auslösebewegungen mittels Umlenkrollen (37) so umgelenkt ist, dass es sich zumindest einmal überkreuzt.

11. Haltesystem nach Anspruch 10,
umfassend ein Bauteil (57), durch das sich kreuzende Abschnitte des Zugseils (33, 34) durch getrennte Ebenen oder Kanäle geführt sind.

12. Haltesystem (10) nach Anspruch 10 oder 11,
wobei das Zugseil (33, 34) durch zumindest einen Seilspanner (35) gespannt ist.

13. Haltesystem (10) nach einem der Ansprüche 8 bis 12,
wobei zwei Baugruppen (11a, 11b, 13a, 13b) jeweils zwei Abwurfhebel (25a, 25b, 25c, 25d) aufweisen und der Synchronisierungsmechanismus an jedem Querträger (13a, 13b) einen Quersynchronisierungsmechanismus (29) für eine synchrone Auslösung der beiden Abwurfhebel (25a, 25b, 25c, 25d) einer der beiden Baugruppen (11a, 11b, 13a, 13b) aufweist, und wobei der Synchronisierungsmechanismus an den Längsträgern (11a, 11b) einen Längssynchronisierungsmechanismus (31) für eine synchrone Auslösung der Abwurfhebel (25a, 25b, 25c, 25d) der beiden Baugruppen (11a, 11b, 13a, 13b) aufweist.

14. Haltesystem (10) nach Anspruch 13,
wobei die Abwurfhebel (25a, 25b, 25c, 25d) über an einer der Baugruppen (11a, 11b, 13a, 13b) geführte Stäbe (39) an den Längssynchronisierungsmechanismus (31) angekoppelt sind.

15. Haltesystem (10) nach einem der Ansprüche 8 bis 14,
wobei die Abwurfhebel (25a, 25b, 25c, 25d) jeweils zwei Scherenhebel (53, 55), einen ersten Lagerabschnitt (41), an dem ein Ende eines ersten Scherenhebels (53) gelenkig gelagert ist, und einen zweiten Lagerabschnitt (43), an dem ein Ende eines zweiten Scherenhebels (55) gelenkig gelagert ist, aufweisen, und wobei der erste Lagerabschnitt (41) ortsfest an einer der Baugruppen (11a, 11b, 13a, 13b) gelagert ist und der zweite Lagerabschnitt (43) linear verfahrbar an einer der Baugruppen (11a, 11b, 13a, 13b) geführt ist, und wobei der zweite Lagerabschnitt (43) zur synchronen Auslösung an den Synchronisierungsmechanismus angebunden ist.
